# EUROPEAN PATENT SPECIFICATION

(11) **EP 3 068 950 B1**
(45) Date of publication and mention of the grant of the patent: **10.10.2018**
(21) Application number: 14795637.9
(22) Date of filing: 07.11.2014
(51) Int. Cl.: E02F 9/08

(54) **CONSTRUCTION MACHINE**
BAUMASCHINE
MACHINE DE CONSTRUCTION

(30) Priority: 12.11.2013 JP 2013234221
(43) Date of publication of application: 21.09.2016
(73) Proprietor: Caterpillar SARL, 1208 Geneva (CH)
(72) Inventor: TANAKA, Kimikage, Tokyo 158-8530 (JP)
(74) Representative: BRP Renaud & Partner mbB Rechtsanwälte Patentanwälte Steuerberater
(86) International application number: PCT/EP2014/074075
(87) International publication number: WO 2015/071194

(56) References cited:
- EP-A1- 1 176 259
- EP-A1- 2 302 140
- EP-A2- 2 581 505
- JP-A- 2012 057 590

## Description

### TECHNICAL FIELD

The present invention relates to a construction machine including a frame forming a frame structure, an engine mounted on the frame, and a partition wall covering a front side of the engine.

### BACKGROUND ART

Generally, a hydraulic shovel, which is a typical example of a construction machine, mainly includes a movable lower traveling body, an upper swinging body rotatably mounted on the lower traveling body, and a working arm apparatus attached to the upper swinging body in a vertically movable manner. In an operation of excavating soil and the like, the working arm apparatus is operated to vertically move, and the upper swinging body swings with respect to the lower traveling body.

The working arm apparatus mainly includes a boom attached to a front portion of the upper swinging body in a vertically movable manner, an arm that is rotatably attached to a front portion of the boom, an operating tool rotatably attached to a lower portion of the arm, a boom cylinder that rotates the boom, an arm cylinder that rotates the arm, and an operation tool cylinder that rotates the operation tool.

The upper swinging body includes a swing frame forming the frame structure thereof, an engine mounted on the swing frame, a hydraulic device disposed on a front side of the engine, and the like. The hydraulic device disposed on the front side of the engine includes a swing motor that makes the upper swinging body swing with respect to the lower traveling body, a control valve that controls supplying/discharging of pressure oil from a hydraulic pump, which is a pressure oil supply source, to a hydraulic actuator such as the boom cylinder, and the like.

A partition wall extending in a left and right direction is disposed between the engine and the hydraulic device. The partition wall covers a front side of the engine to block heat and sound produced by the engine being driven. A supporting frame is disposed on an upper side of the partition wall. The supporting frame is formed of an angle steel and the like and extends across the swing frame in the left and right direction. The partition wall is fixed to the swing frame with the upper end side thereof attached to the supporting frame with a bolt (see, for example, JP 2012-57590).

EP 2 581 505 A2 discloses a construction machine according to the preamble of claim 1. Furthermore, also EP 1 176 259 discloses a construction machine having a partition wall.

The conventional construction machine described above has the following problem to be solved.

Generally, when the upper swinging body is assembled, the engine and the hydraulic device are mounted on the swing frame before the partition wall is attached to the swing frame. Thus, when the partition wall is attached to the swing frame, the engine and the hydraulic device are already mounted on the swing frame. As a result, an operation space, required for an assembly worker to attach a lower end side of the partition wall to the swing frame with a bolt, is small. All things considered, there is a problem that it is difficult to attach the lower end side of the partition wall to the swing frame.

Due to this problem, in some cases, only the upper end side of the partition wall is fixed to the swing frame without the lower end side of the partition wall being fixed to the swing frame. In such a case, a seal member, formed of a resin material, may be disposed between the lower end side of the partition wall and the swing frame, to fill a gap between the lower end side of the partition wall and the swing frame. However, the lower end side of the partition wall is not fixed to the swing frame and thus rattles with respect to the swing frame when the vehicle performs a traveling operation or an operation such as excavating. Thus, there is a problem that a gap is produced between the lower end side of the partition wall and the swing frame, thereby degrading a blocking function of the partition wall.

### DISCLOSURE OF THE INVENTION

The present invention is made in view of the above described situation, and a main technical object of the present invention is to provide a construction machine having the following feature. Specifically, even when an operation space, required for an assembly operator to attach a lower end side of a partition wall to a frame with a bolt and the like, is small due to an engine and an hydraulic device mounted on a frame, the lower end side of the partition wall can be easily and surely fixed on the frame. As a result, a blocking function of the partition wall can be prevented from degrading.

The present invention provides, as a construction machine that achieves the above described technical object, a construction machine including: a frame forming a frame structure; an engine mounted on the frame; and a partition wall that covers a front side of the engine. The frame includes: a bottom plate; and a lateral plate that is positioned at a front lower side of the engine, extends in a left and right direction, and stands on the bottom plate. The partition wall includes: a partition plate that is positioned on an upper side of the lateral plate and extends in the left and right direction; and a protruding plate that protrudes forward from a lower end side of the partition plate and then extends downward. The lateral plate is fit between the partition plate and the protruding plate so that a lower end side of the partition wall is fixed to the frame.

Preferably, the protruding plate includes: an attached portion that extends in the left and right direction and is attached to a front surface of the partition plate on the lower end side; a protruding portion protruding forward from a lower end of the attached portion; a first inclined portion extending obliquely backward and downward from a front end of the protruding portion; and a second inclined portion extending obliquely forward and downward from a lower end of the first inclined portion. Preferably, the first inclined portion is curved to protrude forward as viewed in the left and right direction. Preferably, an opening is formed in the protruding plate. Preferably, the opening has a substantially triangular shape. Preferably, the opening is formed over the protruding portion and the first inclined portion.

In the construction machine of the present invention, the lateral plate is fit between the partition plate and the protruding plate so that the lower end side of the partition wall is fixed to the frame. Thus, even when an operation space, required for attaching the lower end side of the partition wall to the frame with a bolt and the like, is small due to an engine and a hydraulic device mounted on the frame, an assembly operator can easily and surely fix the lower end side of the partition wall on the frame through the following operation. Specifically, the partition wall is lowered from the upper side of the frame and the lateral plate is fit between the partition plate and the protruding plate.

In the construction machine of the present invention, the lateral plate is fit between the partition plate and the protruding plate so that the lower end side of the partition wall is fixed to the frame. Thus, the lower end side of the partition wall moves in accordance with the frame without vibrating with respect to the frame even when a vehicle body performs a traveling operation or an operation such as excavating. Thus, no gap is formed between the lower end side of the partition wall and the frame. As a result, a blocking function of the partition wall can be prevented from degrading.

### BRIEF DESCRIPTION OF THE DRAWINGS

Fig. 1 is a left side view of a hydraulic shovel, as a typical construction machine, having a configuration according to the present invention.
Fig. 2 is a perspective view of a swing frame shown in Fig. 1.
Fig. 3 is an upper view of a device mounted on the swing frame shown in Fig. 2.
Fig. 4 is a front perspective view of a lateral partition wall and the like attached to the swing frame shown in Fig. 2.
Fig 5 is rear perspective view of the lateral partition wall and the like attached to the swing frame shown in Fig. 2.
Fig. 6 is an enlarged view of a lower end side of the lateral partition wall shown in Fig. 4.
Fig. 7 is a cross-sectional view as viewed in the direction A-A in Fig. 6.
Figs. 8(a) and 8(b) are respectively upper and front views of a protruding plate.

### BEST MODE FOR CARRYING OUT THE INVENTION

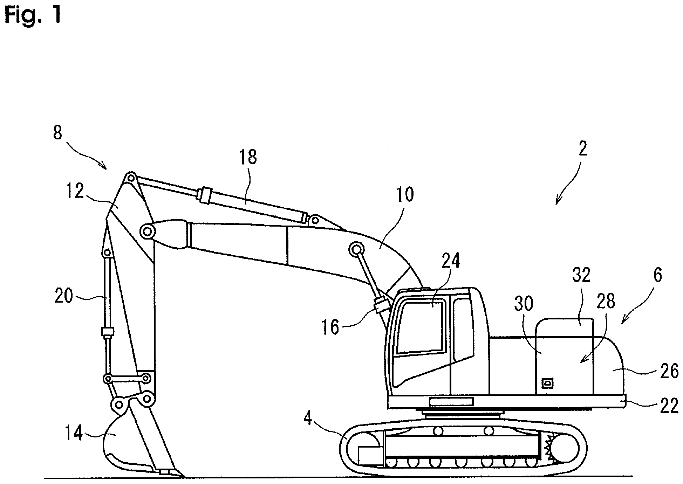

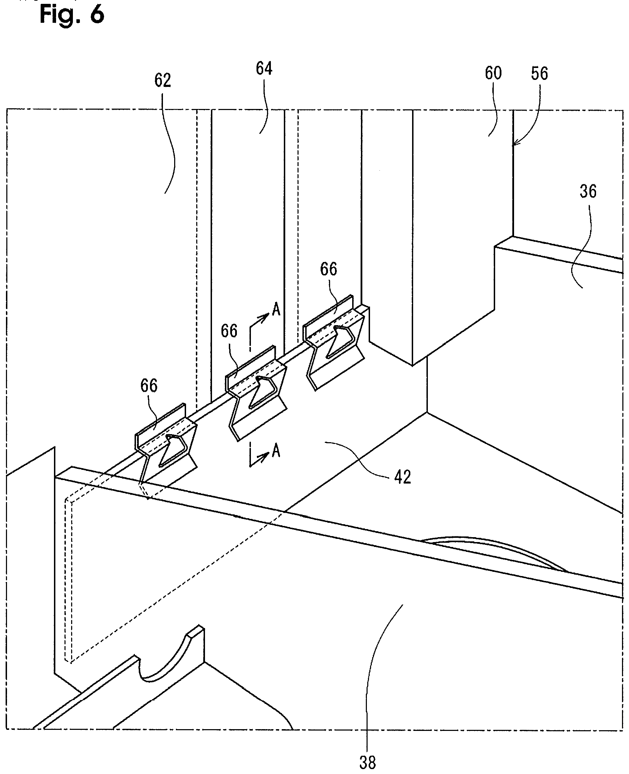

A construction machine having a configuration according to the present invention is described by referring to an embodiment of a hydraulic shovel as a typical construction machine shown in Figs. 1 to 8.

A description is given by referring to Fig. 1. A hydraulic shovel having the entire structure denoted by the numeral 2 mainly includes a movable lower traveling body 4, an upper swinging body 6 mounted on the lower traveling body 4 in such a manner as to be capable of swinging, and a working arm apparatus 8 attached to the upper swinging body 6 in a vertically movable manner. In an operation of excavating soil and the like, the working arm apparatus 8 is operated to be vertically moved, and the upper swinging body 6 swings with respect to the lower traveling body 4.

The working arm apparatus 8 mainly includes a boom 10 attached to a front portion of the upper swinging body 6 in a vertically movable manner, an arm 12 pivotally attached to a front portion of the boom 10, an operating tool 14 pivotally attached to a lower portion of the arm 12, a pair of left and right boom cylinders 16 that are respectively attached to left and right sides of the boom 10 and vertically move the boom 10, an arm cylinder 18 that is disposed at an upper portion of the boom 10 and pivotally moves the arm 12, and a cylinder 20 that is disposed on a front portion of the arm 12 and pivotally moves the operating tool 14.

The upper swinging body 6 includes a swing frame 22 as a frame structure thereof, an operation room 24 where an operator gets in, disposed at a left front portion on the swing frame 22, a counter weight 26 disposed at a rear portion on the swing frame 22, a device containing chamber 28 that is disposed on a front side of the counter weight 26 and contains devices such as an engine, a door 30 that is attached to the swing frame 22 in an openable manner and covers a side portion of the device containing chamber 28, a hood 32 that is attached to the swing frame 22 in an openable manner and covers an upper side of the device containing chamber 28, and the like.

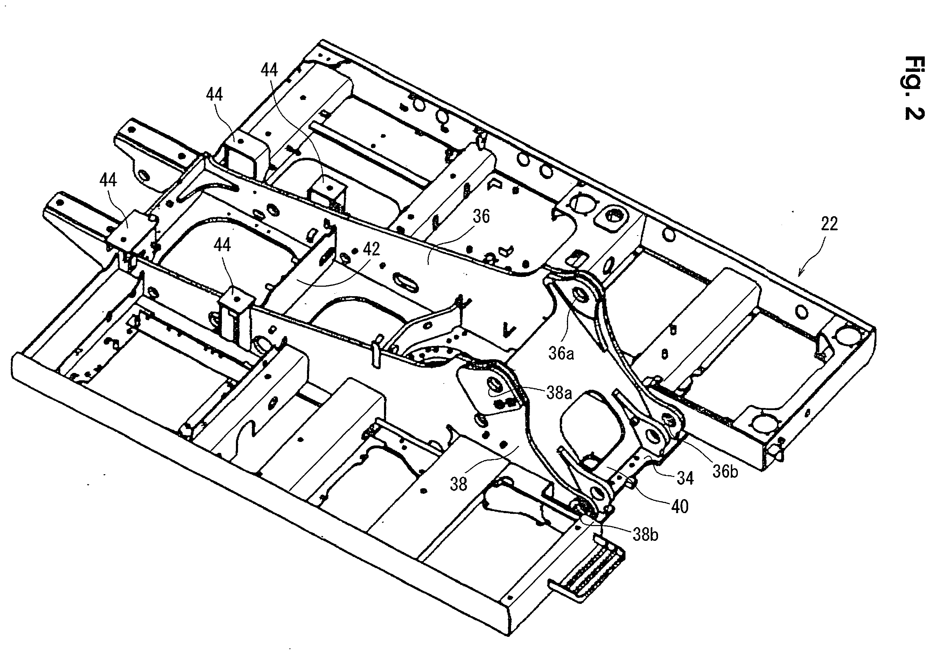

A description is given by referring to Fig. 2. The swing frame 22 includes a bottom plate 34 and a pair of left and right vertical plates 36 and 38 extending in a front and rear direction and standing on the bottom plate 34. Each of the vertical plates 36 and 38 has a substantially triangular shape, and is welded to the bottom plate 34. Boom brackets 36a and 38a, to which the boom 10 is coupled through coupling pins, are respectively formed on upper ends of the vertical plates 36 and 38. Boom cylinder brackets 36b and 38b, to which the boom cylinders 16 are coupled through coupling pins, are respectively formed on front ends of the vertical plates 36 and 38.

An inclined plate 40 obliquely extending along outer edges of the vertical plates 36 and 38 is formed at a front portion between the vertical plates 36 and 38. A lateral plate 42 extending in a left and right direction stands on the bottom plate 34 at a portion slightly more on the rear side than center portion between the vertical plates 36 and 38. The inclined plate 40 and the lateral plate 42 are welded on the vertical plates 36 and 38 and the bottom plate 34. Engine mounts 44 are disposed along the vertical plates 36 and 38 at a portion behind the lateral plate 42. The engine mounts 44 are disposed at two portions on each of the vertical plates 36 and 38 and thus are disposed at total of four portions.

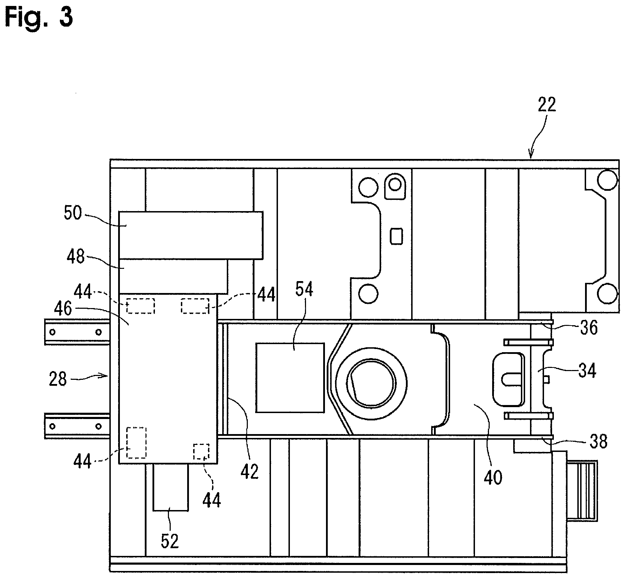

The devices contained in the device containing chamber 28 are described by referring to Fig. 3. An engine 46 is mounted on the engine mounts 44 of the swing frame 22. A cooling fan 48, connected to a distal end of a left side output shaft of the engine 46, is disposed on the left side of the engine 46. A cooling package 50 is disposed more on the left side than the cooling fan 48. The cooling package 50 is an integral package including a plurality of heat exchangers such as a radiator, an oil cooler, and an intercooler. A hydraulic pump 52, as a pressure oil supply source connected to a distal end of a right side output shaft of the engine 46, is disposed on the right side of the engine 46.

A control valve 54 that controls supplying/discharging of pressure oil from the hydraulic pump 52 to the hydraulic actuator such as the boom cylinder 16, is disposed outside of the device containing chamber 28 and on the front side of the engine 46.

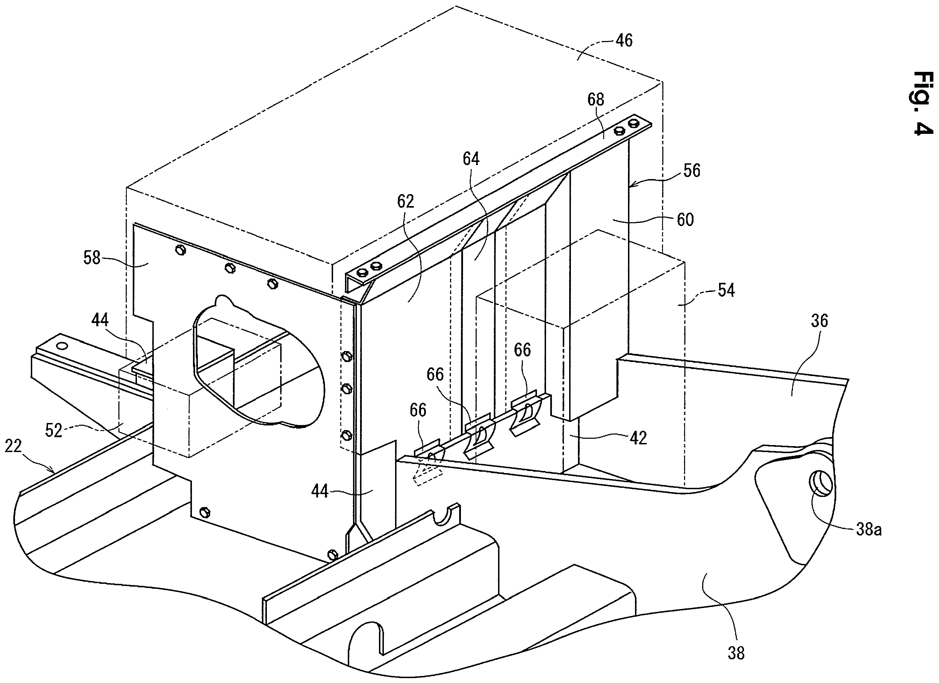

A description is given by referring to Figs. 4 to 6. A lateral partition wall 56 is disposed between the engine 46 and the control valve 54 and on the upper side of the lateral plate 42. The lateral partition wall 56 covers the front side of the engine 46 to block heat and sound produced by the driving engine 46. A vertical partition wall 58 is connected to a right end portion of the lateral partition wall 56. The vertical partition wall 58 extends in the front and rear direction and separates the engine 46 from the hydraulic pump 52.

The lateral partition wall 56 includes a left lateral partition plate 60 positioned on a side of the left vertical plate 36, a right lateral partition plate 62 positioned on a side of the right vertical plate 38, an intermediate lateral partition plate 64 positioned between the left lateral partition plate 60 and the right lateral partition plate 62, and protruding plates 66 respectively attached to front surfaces of the lateral partition plates 60, 62, and 64 on the lower end side.

The lateral partition plates 60, 62, and 64 extend in the left and right direction while vertically standing along an upper rear surface of the lateral plate 42. A right end rear surface of the left lateral partition plate 60 is laid on a left end front surface of the intermediate lateral partition plate 64, whereas a right end front surface of the intermediate lateral partition plate 64 is laid on a left end rear surface of the right lateral partition plate 62. A seal member (not illustrated), formed of a resin material, is disposed therebetween to fill a gap.

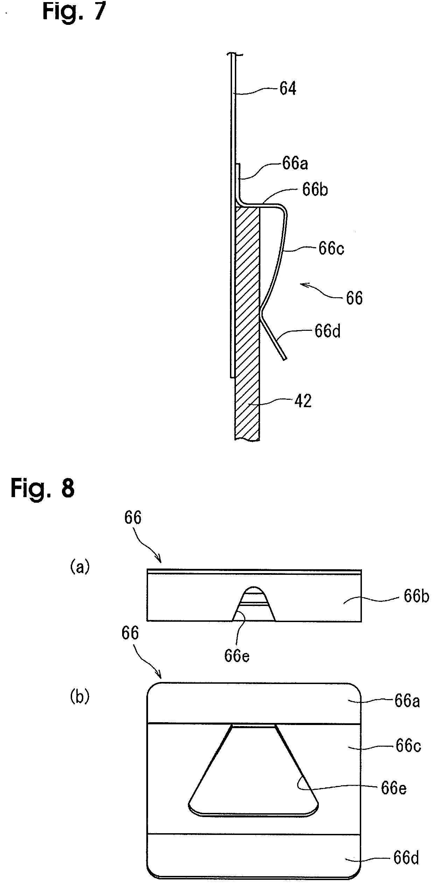

A description is given by referring to Figs. 7 and 8. The protruding plate 66 is formed by bending a rectangular plate material. The protruding plate 66 includes an attached portion 66a that extends in the left and right direction in a vertically standing state and welded to a front surface of each of the lateral partition plates 60, 62, and 64 on the lower end side, a protruding portion 66b extending forward substantially horizontally from the lower end of the attached portion 66a, a first inclined portion 66c extending obliquely backward and downward from the front end of the protruding portion 66b, and a second inclined portion 66d extending obliquely forward and downward from the lower end of the first inclined portion 66c. The first inclined portion 66c is curved to protrude forward as viewed in the left and right direction.

The protruding plate 66, which is attached on the front surface of each of the lateral partition plates 60, 62, and 64 on the lower end side, in an alternative embodiment, may be attached to a rear surface of each of the lateral partition plates 60, 62, and 64 on the lower end side. The protruding plate 66 in this configuration, and that in the configuration of being disposed on the front surface of each of the lateral partition plates 60, 62, and 64 in the lower end side, are symmetrical with respect to each of the lateral partition plates 60, 62, and 64. Specifically, the attached portion 66a is welded to the rear surface of each of the lateral partition plates 60, 62, and 64 on the lower end side. The protruding portion 66b extends substantially horizontally toward the rear from the lower end of the attached portion 66a. The first inclined portion 66c extends obliquely forward and downward from the rear end of the protruding portion 66b. The second inclined portion 66d extends obliquely backward and downward from the lower end of the first inclined portion 66c. In this configuration, the first inclined portion 66c is curved to protrude backward as viewed in the left and right direction. Each of the lateral partition plates 60, 62, and 64 extends in the left and right direction along the upper front surface of the lateral plate 42.

As shown in Fig. 8, a substantially triangular opening 66e, formed over the protruding portion 66b and the first inclined portion 66c, is formed in the protruding plate 66. Thus, the width in the left and right direction of the protruding portion 66b gradually decreases from a portion slightly on the front side than the rear end toward the front to the front end. The width in the left and right direction of the first inclined portion 66c decreases from the upper end toward the lower side to a portion slightly above the lower end.

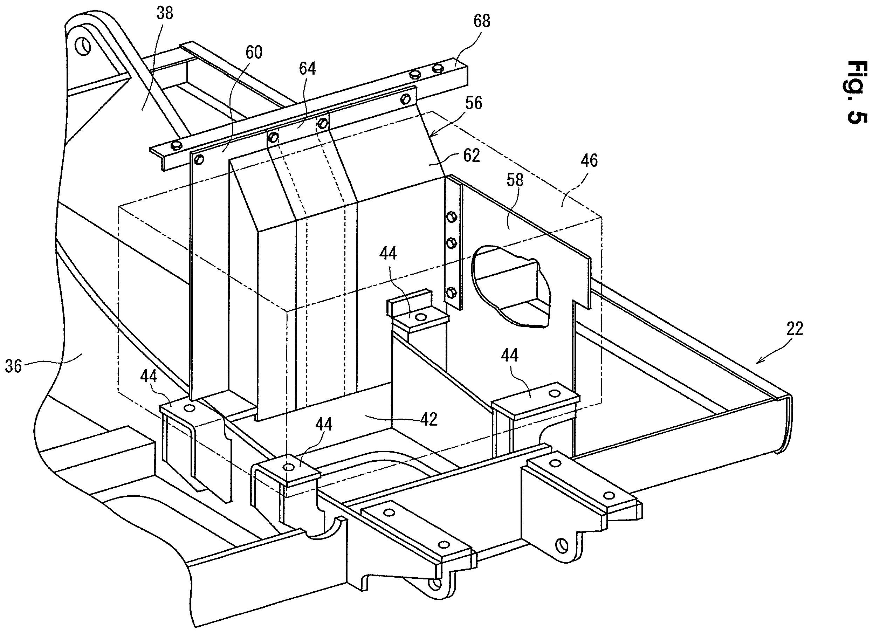

A supporting frame 68 (see Figs. 4 and 5), formed of an angle steel, is disposed on the upper portion of the lateral partition wall 56, and extends across the swing frame 22 in the left and right direction. The upper end sides of the lateral partition plates 60, 62, and 64 are attached to the supporting frame 68 with bolts so that an upper end side of the lateral partition wall 56 is fixed to the swing frame 22. Moreover, the lateral plate 42 is fit between the lateral partition plates 60, 62, and 64 and the protruding plates 66 so that the lower end side of the lateral partition wall 56 is fixed to the swing frame 22.

Effects of the above-described construction machine shown in Fig. 1 to 8 will be described.

In the construction machine of the present invention, the lateral plate 42 is fit between the lateral partition plates 60, 62, and 64 and the protruding plates 66 so that the lower end side of the lateral partition wall 56 is fixed to the swing frame 22. Thus, even when an operation space, required for attaching the lower end side of the lateral partition wall 56 to the swing frame 22 with a bolt and the like, is small due to the engine 46 and the control valve 54 mounted on the swing frame 22, an assembly operator can easily and surely fix the lower end side of the lateral partition wall 56 on the swing frame 22 through the following operation. Specifically, the lateral partition wall 56 is lowered from the upper side of the swing frame 22 and the lateral plate 42 is fit between the lateral partition plates 60, 62, and 64 and the protruding plates 66.

In the construction machine of the present invention, the lateral plate 42 is fit between the lateral partition plates 60, 62, and 64 and the protruding plates 66 so that the lower end side of the lateral partition wall 56 is fixed to the swing frame 22. Thus, the lower end side of the lateral partition wall 56 moves in accordance with the swing frame 22 without vibrating with respect to the swing frame 22 even when the vehicle performs a traveling operation or an operation such as excavating. Thus, no gap is formed between the lower end side of the lateral partition wall 56 and the lateral plate 42 of the swing frame 22. As a result, a blocking function of the lateral partition wall 56 can be prevented from degrading.

The protruding plate 66 includes the attached portion 66a that extends in the left and right direction and is attached on the front surface of each of the lateral partition plates 60, 62, and 64 on the lower end side, the protruding portion 66b extending forward substantially horizontally from the lower end of the attached portion 66a, the first inclined portion 66c that extends obliquely backward and downward from the front end of the protruding portion 66b and is curved to protrude forward as viewed in the left and right direction, and the second inclined portion 66d extending obliquely forward and downward from the lower end of the first inclined portion 66c. Thus, the protruding plate 66 elastically deforms when the lateral plate 42 fits between the lateral partition plates 60, 62, and 64 and the protruding plates 66, whereby the first and the second inclined portions 66c and 66d hold the lateral plate 42 at the front surface. As a result, the lower end side of the lateral partition wall 56 is more easily and surely fixed to the swing frame 22. Furthermore, the same protruding plate 66 can be used for models with different lateral plate thicknesses . Thus, an attempt to share the common protruding plate 66 among a plurality of models can be facilitated.

The substantially triangular opening 66e is formed over the protruding portion 66b and the first inclined portion 66c of the protruding plate 66. Thus, the stress on the elastically deformed protruding plate 66 is dispersed. Thus, the protruding plate 66 can be used for thicker lateral plate, compared with the case where the opening 66e is not formed. As a result, the same protruding plate 66 can be used for a wider range of thicknesses. Thus, the attempt to share the same component can be further facilitated.

### EXPLANATION OF REFERENCE NUMERALS

- 22: swing frame
- 34: bottom plate
- 42: lateral plate
- 46: engine
- 56: lateral partition wall
- 60: left lateral partition wall
- 62: right lateral partition wall
- 64: intermediate lateral partition wall
- 66: protruding plate
- 66a: attached portion
- 66b: protruding portion
- 66c: first inclined portion
- 66d: second inclined portion
- 66e: opening

## Claims

1. A construction machine (2) comprising:
a frame (22) forming a frame structure;
an engine (46) mounted on the frame (22); and
a partition wall (56) that covers a front side of the engine (46), wherein
the frame (22) includes:
a bottom plate (34); and
a lateral plate (42) that is positioned at a front lower side of the engine (46), extends in a left and right direction, and stands on the bottom plate (34),
the partition wall (56) includes:
a partition plate (60, 62, 64) that is positioned on an upper side of the lateral plate (42) and extends in the left and right direction; and a protruding plate (66),
**characterized in that**
the protruding plate (66) protrudes forward from a lower end side of the partition plate (60, 62, 64) and then extends downward, and
the lateral plate (42) is fit between the partition plate (60, 62, 64) and the protruding plate (66) so that a lower end side of the partition wall (56) is fixed to the frame (22).

2. The construction machine (2) according to claim 1, wherein the protruding plate (66) includes:
an attached portion (66a) that extends in the left and right direction and is attached to a front surface of the partition plate (60, 62, 64) on the lower end side;
a protruding portion (66b) protruding forward from a lower end of the attached portion (66a);
a first inclined portion (66c) extending obliquely backward and downward from a front end of the protruding portion (66b); and
a second inclined portion (66d) extending obliquely forward and downward from a lower end of the first inclined portion (66c).

3. The construction machine (2) according to claim 2, wherein the first inclined portion (66c) is curved to protrude forward as viewed in the left and right direction.

4. The construction machine (2) according to claim 2 or 3, wherein an opening (66e) is formed in the protruding plate (66).

5. The construction machine (2) according to claim 4, wherein the opening (66e) has a substantially triangular shape.

6. The construction machine (2) according to claim 4 or 5, wherein the opening (66e) is formed over the protruding portion (66b) and the first inclined portion (66c).

## Patentansprüche

1. Baumaschine (2), umfassend:
einen Rahmen (22), der eine Rahmenstruktur bildet;
einen Motor (46), der auf dem Rahmen (22) montiert ist; und
eine Trennwand (56), die eine vordere Seite des Motors (46) bedeckt,
wobei
der Rahmen (22) einschließt:
eine Bodenplatte (34); und
eine seitliche Platte (42), die an einer vorderen unteren Seite des Motors (46) positioniert ist, sich in eine linke und rechte Richtung erstreckt und auf der Bodenplatte (34) steht,
die Trennwand (56) einschließt:
eine Trennplatte (60, 62, 64), die an einer oberen Seite der seitliche Platte (42) positioniert ist und sich in der linken und rechten Richtung erstreckt; und eine vorspringende Platte (66),
**dadurch gekennzeichnet, dass**
die vorspringende Platte (66) von einer unteren Endseite der Trennplatte (60, 62, 64) nach vorne vorspringt und sich dann nach unten erstreckt, und
die seitliche Platte (42) zwischen der Trennplatte (60, 62, 64) und der vorspringenden Platte (66) so eingepasst ist, dass eine untere Endseite der Trennwand (56) am Rahmen (22) befestigt ist.

2. Baumaschine (2) nach Anspruch 1, wobei die vorspringende Platte (66) einschließt:
einen angesetzten Abschnitt (66a), der sich in der linken und rechten Richtung erstreckt und an einer Vorderfläche der Trennplatte (60, 62, 64) an der unteren Endseite angesetzt ist;
einen vorspringenden Abschnitt (66b), der von einem unteren Ende des angesetzten Abschnitts (66a) nach vorne vorspringt;
einen ersten geneigten Abschnitt (66c), der sich von einem vorderen Ende des vorspringenden Abschnitts (66b) schräg nach hinten und nach unten erstreckt; und
einen zweiten geneigten Abschnitt (66d), der sich von einem unteren Ende des ersten geneigten Abschnitts (66c) schräg nach vorne und nach unten erstreckt.

3. Baumaschine (2) nach Anspruch 2, wobei der erste geneigte Abschnitt (66c) gekrümmt ist, sodass er in der linken und rechten Richtung gesehen nach vorne vorspringt.

4. Baumaschine (2) nach Anspruch 2 oder 3, wobei in der vorspringenden Platte (66) eine Öffnung (66e) gebildet ist.

5. Baumaschine (2) nach Anspruch 4, wobei die Öffnung (66e) eine im Wesentlichen dreieckige Form aufweist.

6. Baumaschine (2) nach Anspruch 4 oder 5, wobei die Öffnung (66e) über dem vorspringenden Abschnitt (66b) und dem ersten geneigten Abschnitt (66c) gebildet ist.

## Revendications

1. Machine de construction (2) comprenant :
un châssis (22) formant une structure de châssis ;
un moteur (46) monté sur le châssis (22) ; et
une paroi de séparation (56) qui recouvre un côté avant du moteur (46), dans lequel
le châssis (22) inclut :
une plaque de fond (34) ; et
une plaque latérale (42) qui est positionnée sur un côté inférieur avant du moteur (46), s'étend dans une direction gauche et droite, et se trouve sur la plaque de fond (34),
la paroi de séparation (56) comprend :
une plaque de séparation (60, 62, 64) qui est positionnée sur un côté supérieur de la plaque latérale (42) et s'étend dans la direction gauche et droite ; et une plaque en saillie (66),
**caractérisée en ce que**
la plaque en saillie (66) fait saillie vers l'avant à partir d'un côté d'extrémité inférieure de la plaque de séparation (60, 62, 64), puis s'étend vers le bas, et
la plaque latérale (42) est ajustée entre la plaque de séparation (60, 62, 64) et la plaque en saillie (66) de sorte qu'un côté d'extrémité inférieur de la paroi de séparation (56) est fixé au châssis (22).

2. Machine de construction (2) selon la revendication 1, dans laquelle la plaque en saillie (66) comprend :
une partie attachée (66a) qui s'étend dans la direction gauche et droite et qui est attachée à une surface avant de la plaque de séparation (60, 62, 64) du côté d'extrémité inférieure ;
une partie en saillie (66b) faisant saillie vers l'avant à partir d'une extrémité inférieure de la partie attachée (66a) ;
une première partie inclinée (66c) s'étendant obliquement vers l'arrière et vers le bas à partir d'une extrémité avant de la partie en saillie (66b) ; et
une seconde partie inclinée (66d) s'étendant obliquement vers l'avant et vers le bas à partir d'une extrémité inférieure de la première partie inclinée (66c).

3. Machine de construction (2) selon la revendication 2, dans laquelle la première partie inclinée (66c) est incurvée pour faire saillie vers l'avant telle que vue dans la direction gauche et droite.

4. Machine de construction (2) selon la revendication 2 ou 3, dans laquelle une ouverture (66e) est formée dans la plaque en saillie (66).

5. Machine de construction (2) selon la revendication 4, dans laquelle l'ouverture (66e) a une forme sensiblement triangulaire.

6. Machine de construction (2) selon la revendication 4 ou 5, dans laquelle l'ouverture (66e) est formée au-dessus de la partie en saillie (66b) et de la première partie inclinée (66c).
